# EUROPÄISCHE PATENTSCHRIFT

(11) **EP 4 062 527 B1**
(45) Veröffentlichungstag und Bekanntmachung des Hinweises auf die Patenterteilung: **23.10.2024**
(21) Anmeldenummer: 20804249.9
(22) Anmeldetag: 10.11.2020
(51) Int. Cl.: H02P 3/22

(54) **VERFAHREN ZUM ABBREMSENDEN STEUERN WENIGSTENS EINES SERVOMOTORS, ROBOTER UND COMPUTERPROGRAMMPRODUKT**
METHOD FOR CONTROLLING AT LEAST ONE SERVOMOTOR IN A BRAKING MANNER, ROBOT, AND COMPUTER PROGRAM PRODUCT
METHODE POUR COMMANDER AU MOINS UN SERVOMOTEUR DE MANIERE A FREINER, ROBOT, ET PRODUIT DE PROGRAMME INFORMATIQUE

(30) Priorität: 21.11.2019 DE 102019217957
(43) Veröffentlichungstag der Anmeldung: 28.09.2022
(73) Patentinhaber: KUKA Deutschland GmbH, 86165 Augsburg (DE)
(72) Erfinder: HOFMANN, Josef, 86709 Wolferstadt (DE); KEYL, Hartmut, 86161 Augsburg (DE)
(74) Vertreter: Oelke, Jochen
(86) Internationale Anmeldenummer: PCT/EP2020/081584
(87) Internationale Veröffentlichungsnummer: WO 2021/099177

(56) Entgegenhaltungen:
- EP-A1- 2 224 586
- DE-A1- 102007 059 492
- DE-A1- 102016 203 701
- DE-A1- 102016 208 888
- DE-B4- 102007 059 492

## Beschreibung

Die Erfindung betrifft ein Verfahren zum abbremsenden Steuern wenigstens eines Servomotors mittels eines Frequenzumrichters, der eine an ein elektrisches Wechselspannungsnetz anschließbare Gleichrichterschaltung, einen im an das elektrische Wechselspannungsnetz angeschlossenen Zustand aus dem elektrischen Wechselspannungsnetz gespeisten Gleichspannungszwischenkreis mit einem Zwischenkreiskondensator und mit einem über einen Brems-Chopper des Gleichspannungszwischenkreises zuschalt- und trennbaren Bremswiderstand, und wenigstens eine aus dem Gleichspannungszwischenkreis gespeiste Wechselrichterschaltung mit ansteuerbaren Leistungshalbleiterschaltern umfasst. Die Erfindung betrifft außerdem einen entsprechend eingerichteten Roboter und ein zugehöriges Computerprogrammprodukt.

Die EP 2 224 586 A1 offenbart ein Verfahren zur Steuerung eines motorbetriebenen Industrieroboters, welcher zumindest einen Antriebsmotor umfasst, der von einer an Netzspannung anschließbaren Versorgungsschaltung gespeist wird, welche zumindest eine mit der Netzspannung verbindbare Gleichrichterschaltung, eine Zwischenkreisschaltung mit zumindest einem Zwischenkreiskondensator, sowie eine ausgangsseitig an den Antriebsmotor angeschlossene Brückenschaltereinrichtung umfasst, die eine Wechsel- oder Gleichstromversorgung für den Antriebsmotor bereitstellt, wobei die Versorgungsschaltung des Antriebsmotors durch eine Steuereinrichtung zum Beschleunigen und Abbremsen des Antriebsmotors gesteuert wird. Das dortige Verfahren zum elektrischen Abbremsen des Antriebsmotors umfasst die Schritte des Trennens der Zwischenkreisschaltung vom Netz und des Regelns der Zwischenkreisspannung auf einen vorgegebenen Wert größer Null, wobei der Zwischenkreiskondensator in einem generatorischen Betrieb des Antriebsmotors gespeist wird.

Die DE 10 2007 059 492 B4 offenbart Industrieroboter, aufweisend einen Roboterarm, der mehrere Achsen und wenigstens einen elektrischen Antrieb mit einem Drehstrommotor und mit einer den Drehstrommotor ansteuernden Leistungselektronik aufweist, wobei die Leistungselektronik einen den Drehstrommotor antreibenden Dreiphasen-Wechselrichter und einen, einen Zwischenkreis-Kondensator aufweisenden und dem Dreiphasen-Wechselrichter vorgeschalteten Zwischenkreis mit einem ersten Bremswiderstand und mit einem ersten Schalter aufweist, wobei der elektrische Antrieb eingerichtet ist, die relevante Achse zu bewegen, wobei der Industrieroboter eingerichtet ist, den Drehstrommotor im Rahmen einer Notbremsung gleichzeitig mittels zweier voneinander unabhängiger elektrischer Strompfade kurz zu schließen und während einer Notbremsung den ersten Schalter zu schließen, um den Bremswiderstand parallel zum Zwischenkreiskondensator zu schalten, so dass einer der beiden elektrischen Strompfade für die Notbremsung durch den ersten Bremswiderstand verläuft.

Die DE102016208888 zeigt einen Brems-Chopperschalter, der abhängig davon, ob eine Zwischenkreisspannung einen oberen Schwellwert über- oder einen unteren Schwellwert unterschreitet aus- oder eingeschaltet wird.

Die DE102016203701A1 offenbart einen Roboterarm mit mehreren von Elektromotoren angetriebenen Gelenken und einer Steuereinrichtung.

Aufgabe der Erfindung ist es, ein Verfahren zum abbremsenden Steuern wenigstens eines Servomotors zu schaffen, das besonders effektiv und sicher arbeitet.

Die Aufgabe wird gelöst durch Verfahren zum abbremsenden Steuern wenigstens eines Servomotors mittels eines Frequenzumrichters, der eine an ein elektrisches Wechselspannungsnetz anschließbare Gleichrichterschaltung, einen im an das elektrische Wechselspannungsnetz angeschlossenen Zustand aus dem elektrischen Wechselspannungsnetz gespeisten Gleichspannungszwischenkreis mit einem Zwischenkreiskondensator und mit einem über einen Brems-Chopper des Gleichspannungszwischenkreises zuschalt- und trennbaren Bremswiderstand, und wenigstens eine aus dem Gleichspannungszwischenkreis gespeiste Wechselrichterschaltung mit ansteuerbaren Leistungshalbleiterschaltern umfasst, aufweisend die Schritte:
- Trennen des Gleichspannungszwischenkreises vom elektrischen Wechselspannungsnetz,
- Bremsen des Servomotors durch Ansteuern der Leistungshalbleiterschalter der Wechselrichterschaltung in einem generatorischen Bremsbetrieb, um die Drehzahl des Servomotors zu reduzieren,
- Ansteuern des Brems-Choppers derart, dass der Bremswiderstand bei einer maximalen Zwischenkreisspannung, die eine Einschaltschwelle für den Brems-Chopper bildet, zugeschaltet wird und bei einer minimalen Zwischenkreisspannung, die eine Ausschaltschwelle für den Brems-Chopper bildet, getrennt wird, wobei
- die Einschaltschwelle und/oder die Ausschaltschwelle während des generatorischen Bremsbetriebs des Servomotors in Abhängigkeit der momentanen Drehzahl des Servomotors dynamisch verändert wird.

Das erfindungsgemäße Verfahren kann grundsätzlich in Ansteuerung eines einzigen Servomotors durchgeführt werden. Das erfindungsgemäße Verfahren kann jedoch insbesondere in Ansteuerung von wenigstens zwei Servomotoren durchgeführt werden. In der speziellen Ausgestaltung der Ansteuerung von Antrieben eines Roboterarms kann das erfindungsgemäße Verfahren beispielsweise in Ansteuerung von sechs oder sieben Servomotoren, welche die Antriebe eines Roboterarms bilden, durchgeführt werden.

Unter einem abbremsenden Steuern wird erfindungsgemäß verstanden, dass während der Durchführung des Verfahrens der eine Servomotor oder die mehreren Servomotoren weder durch mechanische Bremsen und weder durch (elektro-)mechanische Bremsen, noch durch eine Kurzschlussbremsung abgebremst werden, sondern während der Durchführung des Verfahrens ausschließlich in einem die Wechselrichterschaltung aktiv angesteuerten generatorischen Betrieb des einen Servomotors oder der mehreren Servomotoren abgebremst werden. In einem solchen aktiv angesteuerten generatorischen Betrieb des einen Servomotors oder der mehreren Servomotoren wird somit über die Wechselrichterschaltung in den Gleichspannungszwischenkreis elektrische Energie eingespeist bzw. Energie ausgetauscht, so dass durch einschaltendes und ausschaltendes Ansteuern der Leistungshalbleiterschalter der Wechselrichterschaltung entsprechende Wechselströme in die Wicklungen des einen Servomotors oder der mehreren Servomotoren eingeleitet werden können, die magnetische Felder erzeugen, welche abbremsende mechanische Kräfte an der Servomotorwelle bzw. an den Servomotorwellen bewirken. Unter einem Abbremsen ist die Reduzierung der Drehzahl der jeweiligen Servomotorwelle zu verstehen. Ein Abbremsen muss nicht notwendiger Weise bis zu einem vollständigen Stillstand der entsprechenden Servomotorwelle durchgeführt werden. Vielmehr kann ein Abbremsen lediglich von einer höheren ersten Drehzahl zu einer niedrigeren zweiten Drehzahl, die geringer ist als die erste Drehzahl, durchgeführt werden.

Im Falle von zwei oder mehr Servomotoren, die gemäß einem der erfindungsgemäßen Verfahren abbremsend angesteuert werden, müssen nicht sämtliche Servomotoren gleichzeitig abbremsend angesteuert werden. Vielmehr kann zu beliebigen Zeitpunkten wahlweise eine erste Teilgruppe einer Untermenge von Servomotoren abbremsend angesteuert sein und einer zweite Teilgruppe einer anderen Untermenge von Servomotoren, stationär mit einer gleichbleibenden Geschwindigkeit, unangetrieben, d.h. in einem Leerlauf oder sogar beschleunigend angetrieben sein. In einem speziellen Zustand kann lediglich ein einziger Servomotor generatorisch abbremsend angesteuert sein und die sonstigen Servomotoren nicht generatorisch abbremsend angesteuert sein. In einem besonderen Zustand können alle Servomotoren gleichzeitig generatorisch abbremsend angesteuert sein.

Der wenigstens eine Servomotor wird mittels des erfindungsgemäßen Frequenzumrichters in seiner Position (die Motorposition, d.h. die momentane Winkelstellung der Motorwelle), in seiner Drehzahl, in seiner Beschleunigung und/oder seinem Bremsverhalten (negative Beschleunigung) elektrisch angesteuert. Im Falle von zwei oder mehr Servomotoren weist der Frequenzumrichter eine der Anzahl der Servomotoren entsprechende Anzahl von Wechselrichterschaltungen auf. Die mehreren Wechselrichterschaltungen sind dabei an einen gemeinsamen Gleichspannungszwischenkreis angeschlossen. Der gemeinsame Gleichspannungszwischenkreis wird von einer gemeinsamen Gleichrichterschaltung aus demselben elektrischen Wechselspannungsnetz gespeist, wenn der Frequenzumrichter an das elektrische Wechselspannungsnetz angeschlossen ist. Während des erfindungsgemäßen Verfahrens des abbremsenden Ansteuerns ist der Frequenzumrichter, insbesondere die gemeinsame Gleichrichterschaltung jedoch vom elektrischen Wechselspannungsnetz vorübergehend getrennt. Dies bedeutet, dass im Falle von zwei oder mehreren Servomotoren in einem Zustand in dem keiner der Servomotoren abbremsend angesteuert sind, der Frequenzumrichter wieder an das elektrische Wechselspannungsnetz angeschlossen ist.

Das elektrische Wechselspannungsnetz stellt elektrische Energie aus einem Stromnetz eines Energieversorgers bereit. Im Allgemeinen wird dies ein Niederspannungsnetz sein. Das Niederspannungsnetz kann insbesondere ein Dreiphasenwechselspannungsnetz sein. Das Dreiphasenwechselspannungsnetz liefert eine sinusförmige Netzwechselspannung. Diese sinusförmige Netzwechselspannung kann insbesondere einen Effektivwert aufweisen, bei dem zwischen einem Außenleiter des Dreiphasenwechselspannungsnetzes und einem Neutralleiter des Dreiphasenwechselspannungsnetzes eine Spannung von beispielsweise 230 Volt und zwischen jeweils zwei der drei Außenleitern eine Spannung von beispielsweise 400 Volt anliegt. Die Netzfrequenz kann beispielsweise 50 Hertz oder 60 Hertz betragen. Das Dreiphasenwechselspannungsnetz kann insbesondere als ein TN-System konfiguriert sein, das drei Außenleiter (L1, L2, L3), einen Neutralleiter (N) und einen Schutzleiter (PE) umfasst.

Die Gleichrichterschaltung des Frequenzumrichters kann beispielsweise ein Dreiphasengleichrichter sein. Der Dreiphasengleichrichter kann in der Bauart einer ungesteuerten Drehstrombrücke realisiert sein.

Der Gleichspannungszwischenkreis wird aus dem elektrischen Wechselspannungsnetz mit elektrischer Energie gespeist, wenn der Frequenzumrichter an das elektrische Wechselspannungsnetz angeschlossen ist. Wenn der Gleichspannungszwischenkreis vom elektrischen Wechselspannungsnetz getrennt ist, wie dies in Betriebszeiten der Fall ist, in denen das erfindungsgemäße Verfahren durchgeführt wird, wird der Gleichspannungszwischenkreis ausschließlich durch elektrische Energie aus der Wechselrichterschaltung versorgt, die in einem generatorischen Betrieb des wenigstens einen Servomotors elektrische Energie liefern kann.

In den Betriebszeiten, in denen das erfindungsgemäße Verfahren durchgeführt wird, kann elektrische Energie außerdem vom Zwischenkreiskondensator abgegeben werden und zwar entweder an die Wechselrichterschaltung oder an den Bremswiderstand.

Der Bremswiderstand ist ausgebildet, in seinem an den Gleichspannungszwischenkreis zugeschalteten Zustand elektrische Energie aus dem Gleichspannungszwischenkreis zu entnehmen und in Wärme umzuwandeln. In seinem vom Gleichspannungszwischenkreis getrennten Zustand hat der Bremswiderstand auf den Gleichspannungszwischenkreis keine elektrische Wirkung, d.h. der Gleichspannungszwischenkreis bleibt im getrennten Zustand des Bremswiderstands vom Bremswiderstand unbeeinflusst.

Der Brems-Chopper, über den der Bremswiderstand dem Gleichspannungszwischenkreis zugeschaltet und/oder getrennt wird, ist ein ansteuerbarer Schalter. Der Brems-Chopper kann insoweit pulsweitengesteuert betrieben sein.

Die aus dem Gleichspannungszwischenkreis gespeiste Wechselrichterschaltung umfasst Leistungshalbleiterschalter, die elektronisch, beispielsweise von zugeordneten Treiberschaltungen angesteuert sein können. Die Wechselrichterschaltung kann ein Dreiphasen-Wechselrichter sein und beispielsweise als ein Zweistufen-Wechselrichter (U-Umrichter) oder ein Pulswechselrichter ausgebildet sein. In der Wechselrichterschaltung führen die Leistungshalbleiterschalter die elektrische Energie an den Servomotor, wenn Strom und Spannung das gleiche Vorzeichen haben. Die elektrische Energie fließt somit vom Gleichspannungszwischenkreis ab und in den Servomotor hinein. Im generatorischen Betrieb führen erfindungsgemäß nicht die den Leistungshalbleiterschaltern zugeordneten Freilaufdioden die elektrische Energie ab, um generatorische Energie aus dem Servomotor bzw. den Servomotoren in den Gleichspannungszwischenkreis d.h. in den Zwischenkreiskondensator zurückzuliefern, sondern die Leistungshalbleiterschalter bleiben aktiv und werden entsprechend von den Leistungshalbleiterschaltern zugeordneten Treiberschaltungen angesteuert, um elektrische Energie von den Servomotoren abzuziehen und in den Gleichspannungszwischenkreis d.h. in den Zwischenkreiskondensator einzuspeisen.

Bei dem erfindungsgemäßen Verfahren erfolgt zunächst ein Trennen des Gleichspannungszwischenkreises vom elektrischen Wechselspannungsnetz. Dies ist beispielsweise im Falle einer Notabschaltung der jeweiligen Maschine, die von dem wenigstens einen Servomotor angetrieben wird, zumindest zweckmäßig oder sogar im Hinblick auf bestimmte zu beachtende Sicherheitsanforderungen zwingend erforderlich.

So ist beispielsweise bei Industrierobotern im Falle eines Not-Halts der Kategorie 0 (z.B. gemäß Norm EN 60204) eine sofortige Unterbrechung der elektrischen Energieversorgung vorgeschrieben, insbesondere wenn beispielsweise eine mechanische Trennung d.h. ein Auskuppeln im Antriebstrang und/oder ein mechanisches Bremsen alleine nicht möglich ist.

Andererseits kann eine Maschine, wie der beispielhafte Industrieroboter Systemzustände aufweisen, in denen eine gesteuerte Drehzahlreduzierung der Servomotoren, insbesondere bis auf einen Stillstand bei der Drehzahl Null, schneller erfolgt, als durch eine bloße mechanische Bremsung, bei der die Servomotoren nicht geregelt in ihren Drehzahlen heruntergefahren werden.

Bei dem erfindungsgemäßen Verfahren erfolgt deshalb ein Bremsen des wenigstens einen Servomotors durch aktives Ansteuern der Leistungshalbleiterschalter der Wechselrichterschaltung in einem generatorischen Bremsbetrieb, um die Drehzahl des Servomotors steuerungstechnisch kontrolliert zu reduzieren. Da der Frequenzumrichter in der betroffenen Situation jedoch vom elektrischen Wechselspannungsnetz getrennt ist, wird erfindungsgemäß sichergestellt, dass im Gleichspannungszwischenkreis einerseits genug elektrische Energie vorhanden bleibt, die ausreicht, um die Wechselrichterschaltung zu betreiben, jedoch andrerseits die Energiemenge im Gleichspannungszwischenkreis auf ein mögliches Minimum reduziert wird, so dass ein ungewollter ggf. fehlerbehafteter Wiederanlauf des wenigstens einen Servomotors zumindest weitgehend oder sogar vollständig unterbunden werden kann. So kann auch die Funktion eines sicher abgeschalteten Moments (STO, Safe Torque Off) realisiert werden.

Erfindungsgemäß wird dies erreicht, indem der Brems-Chopper derart angesteuert wird, dass der Bremswiderstand bei einer maximalen Zwischenkreisspannung, die eine Einschaltschwelle für den Brems-Chopper bildet, zugeschaltet wird und bei einer minimalen Zwischenkreisspannung, die eine Ausschaltschwelle für den Brems-Chopper bildet, getrennt wird. Gleichzeitig werden die Einschaltschwelle und/oder die Ausschaltschwelle während des generatorischen Bremsbetriebs des Servomotors in Abhängigkeit der momentanen Drehzahl des Servomotors dynamisch verändert. Durch eine dynamische Änderung von Einschaltschwelle und/oder Ausschaltschwelle kann die im Gleichspannungszwischenkreis zu speichernde Menge an elektrischer Energie dynamisch an die momentan erforderlichen Bedingungen angepasst werden und zwar hinsichtlich beider Zielgrößen, nämlich hinsichtlich einer ausreichend hohen Energiemenge, um die Wechselrichterschaltung mit elektrischer Energie versorgen zu können, so dass der Servomotor generatorisch betrieben d.h. abgebremst werden kann, und hinsichtlich einer möglichst niedrigen Energiemenge, um genügend Energie aus dem System zu nehmen, so dass ein möglicherweise gefährlicher, unbeabsichtigter Wiederanlauf des Servomotors zuverlässig verhindert ist.

Im Gegensatz zum Stand der Technik, nach dem es bekannt ist, die am Zwischenkreiskondensator anliegende Zwischenkreisspannung lediglich auf einen vorgegebenen Soll-Wert zu regeln, wird erfindungsgemäß ein solcher Soll-Wert nicht fest vorgegeben, sondern die Einschaltschwelle und/oder die Ausschaltschwelle des Brems-Choppers dynamisch während des generatorischen Betriebs des wenigstens einen Servomotors verändert.

In einer speziellen Ausführungsform werden die Einschaltschwelle und/oder die Ausschaltschwelle während des generatorischen Bremsbetriebs des Servomotors in Abhängigkeit der momentanen Drehzahl des Servomotors dynamisch derart verändert, dass die Zwischenkreisspannung mit abnehmender Drehzahl des Servomotors kontinuierlich reduziert wird.

Im Falle von mehr als einem einzigen Servomotor kann die Zwischenkreisspannung mit abnehmender Drehzahl desjenigen Servomotors kontinuierlich reduziert wird, der momentan in seinem generatorischen Betrieb die höchste Spannung induziert. Im Laufe der Durchführung eines erfindungsgemäßen Verfahrens d.h. während der Dauer eines Bremsvorgangs kann gegebenenfalls der in Bezug genommene Servomotor in dessen Abhängigkeit die Zwischenkreisspannung mit dessen abnehmender Drehzahl kontinuierlich reduziert wird, wechseln. Wenn also derjenige Servomotor, in dessen Abhängigkeit die Zwischenkreisspannung bisher reduziert wird, zum Stehen gekommen ist oder seine momentane Drehzahl zumindest soweit reduziert ist, dass ein anderer Servomotor eine höhere Drehzahl aufweist, also folglich eine dann größere Spannung im Zwischenkreisspannung induziert, kann zur Regelung der Zwischenkreisspannung sozusagen auf diesen anderen Servomotor umgeschaltet werden, so dass dieser andere Servomotor insoweit die neue Leitgröße für die Regelung der Zwischenkreisspannung bildet.

Die Drehzahl des Servomotors kann auf Grundlage einer mittels eines Motorpositionssensors gemessenen momentanen Drehzahl des Servomotors bestimmt werden. Dazu kann die momentane Drehzahl des Servomotors aus zwei erfassten Winkelstellungen der Servomotorwelle zu zwei verschiedenen Zeitpunkten bestimmt d.h. berechnet werden.

Alternativ zu einer Messung der Drehzahl des Servomotors mittels eines Motorpositionssensors oder ergänzend zu einer Messung der Drehzahl des Servomotors mittels eines Motorpositionssensors, beispielsweise zur Schaffung einer redundanten, insbesondere diversitären Auswertung, kann die Drehzahl des Servomotors auf Grundlage der gemessenen, momentan im Servomotor vorherrschenden Motorspannung des Servomotors bestimmt werden. Dazu kann auf Basis einer bauartbedingten festen Kennlinie des Servomotors über die momentan vorliegende, gemessene Motorspannung aus der Kennlinie die momentane Drehzahl des Servomotor abgelesen werden.

Die Reduktion der Zwischenkreisspannung kann insbesondere proportional zur Abnahme der Drehzahl des Servomotors durchgeführt werden. Die Reduktion der Zwischenkreisspannung kann insbesondere synchron zur Abnahme der Drehzahl des Servomotors durchgeführt werden.

Mit abnehmender Drehzahl des Servomotors reduziert sich die kinetische Energie des an den Servomotor angekoppelten kinematischen Systems, wie beispielsweise eines an die Motorwelle des Servomotors angeschlossenen Getriebes, Gliedes des Roboterarms und/oder einer distalen Teilkette von Gliedern und Gelenken des Roboterarms. In Folge dessen wird zum Abbremsen des angekoppelten kinematischen Systems aufgrund der reduzierten kinetischen Energie nur noch eine geringere Bremsenergie benötigt, um das sich noch verlangsamt in Bewegung befindliche kinematischen System bis zum Stillstand abbremsen zu können. Im Idealfall ist also in demjenigen Moment, in dem das an den Servomotor angekoppelte kinematische System zum Stilltand kommt, die elektrische Energie im Zwischenkreis vollständig oder zumindest sehr weitgehend entnommen. Daraus ergibt sich dann ein weiterer Vorteil, nämlich, dass ein ungewolltes d.h. gegebenenfalls fehlerverursachtes Wiederanlaufen des Servomotors schon deshalb nicht mehr möglich ist, weil nicht genug elektrische Energie im Zwischenkreis vorhanden ist, um den Servomotor anlaufen lassen zu können.

In einer besonderen Weiterbildung können die Einschaltschwelle und/oder die Ausschaltschwelle während des generatorischen Bremsbetriebs des Servomotors in Abhängigkeit der momentanen Drehzahl des Servomotors derart verändert werden, dass die Veränderung der Einschaltschwelle und/oder der Ausschaltschwelle auf Grundlage einer mittels eines Motorpositionssensors gemessenen momentanen Drehzahl des Servomotors oder auf Grundlage des gemessenen momentan im Servomotor vorherrschenden Motorspannung des Servomotors durchgeführt wird.

In einer ersten Ausführungsvariante kann also die Veränderung der Einschaltschwelle und/oder der Ausschaltschwelle auf Grundlage einer mittels eines Motorpositionssensors gemessenen momentanen Drehzahl des Servomotors durchgeführt werden. Der Motorpositionssensor dient der Erfassung der momentanen Drehwinkellage der Motorwelle des Servomotors. Der Motorpositionssensor wird u.a. auch als Drehgeber bezeichnet. Aus jeweils zwei zu verschiedenen Zeitpunkten erfassten Drehwinkellagen der Motorwelle des Servomotors kann auch die Drehgeschwindigkeit und/oder die Drehbeschleunigung der Motorwelle des Servomotors abgeleitet und insofern bestimmt werden. Als ein Motorpositionssensor kann beispielsweise ein Resolver, ein Inkrementalgeber, aber auch ein Absolutwertgeber herangezogen werden.

In einer zweiten Ausführungsvariante kann jedoch die Veränderung der Einschaltschwelle und/oder der Ausschaltschwelle auch auf Grundlage der gemessenen momentan im Servomotor vorherrschenden Motorspannung des Servomotors durchgeführt werden. In Servomotoren ist bekanntlich die Motorspannung, d.h. die elektrische Spannung in den Wicklungen proportional zur Drehzahl der Motorwelle des Servomotors. Die Motorspannung des Servomotors kann insoweit direkt aus dem Schaltkreis, an den die Wechselrichterschaltung des erfindungsgemäßen Frequenzumrichters angeschlossen ist, elektrisch abgegriffen werden. Folglich sind in dieser zweiten Ausführungsvariante keine separaten Sensorbauteile notwendig.

Die Einschaltschwelle und/oder die Ausschaltschwelle können während des generatorischen Bremsbetriebs des Servomotors in Abhängigkeit der momentanen Drehzahl des Servomotors bis zu einem vorgegebenen Minimalschwellwert abgesenkt werden, insbesondere der Ausschaltschwellwert auf einen Minimalschwellwert abgesenkt werden, der unter der Netzspannung des Wechselspannungsnetzes liegt.

Ganz allgemein definieren die Einschaltschwelle und die Ausschaltschwelle einen Zweipunktregler mit Hysterese, derart, dass bei Überschreiten der Einschaltschwelle von einer niedrigeren Spannung kommend der Brems-Chopper den Bremswiderstand in den Gleichspannungszwischenkreis zuschaltet, so dass in dem Bremswiderstand elektrische Energie in Wärme umgewandelt wird und die Zwischenkreisspannung sinkt. Wenn die Spannung von der höheren Spannung kommend sinkt, muss die Spannung im Gleichspannungszwischenkreis dann jedoch über die Einschaltschwelle hinaus weiter sinken, bis sie unter die Spannung der Ausschaltschwelle sinkt. Die Ausschaltschwelle liegt insoweit stets unter der Einschaltschwelle und zwar um eine Spannungsdifferenz, welche die Hysterese bestimmt. Bei Unterschreiten der Ausschaltschwelle von einer höheren Spannung kommend trennt der Brems-Chopper den Bremswiderstand wieder von dem Gleichspannungszwischenkreis, so dass in dem Gleichspannungszwischenkreis die Zwischenkreisspannung wieder ansteigen kann.

Indem der Minimalschwellwert auf einen Spannungswert abgesenkt wird, der unter der Netzspannung des Wechselspannungsnetzes liegt, kann die Zwischenkreisspannung maximal abgesenkt werden, was eine Maximierung der generatorischen Leistung zulässt, so dass der Servomotor bzw. die Servomotoren mit maximaler generatorischer Energie abgebremst werden können.

Der Minimalschwellwert könnte somit bis auf Null abgesenkt werden. Allerdings kann es je nach Ansteuerungsart vorgesehen sein, dass die Treiber der Wechselrichterschaltung d.h. die Leistungshalbleiterschalter der Wechselrichterschaltung auch mittels elektrischer Energie aus dem Gleichspannungszwischenkreis des Frequenzumrichters gespeist werden. In diesem Falle ist eine Absenkung des Minimalschwellwertes bis auf null Volt nicht zweckmäßig.

In einer besonderen Ausführungsform können deshalb die Einschaltschwelle und/oder die Ausschaltschwelle während des generatorischen Bremsbetriebs des Servomotors in Abhängigkeit der momentanen Drehzahl des Servomotors lediglich bis zu einem solchen Minimalschwellwert abgesenkt werden, bei dem im Gleichspannungszwischenkreis eine Mindestspannung anliegt, bei welcher der generatorische Bremsbetrieb des Servomotors durch Ansteuern der Leistungshalbleiterschalter der Wechselrichterschaltung weiterhin sichergestellt ist. Dieser Minimalschwellwert kann beispielsweise zwischen Null und der Netzspannung des Wechselspannungsnetzes liegen.

Zur gleichzeitigen Ansteuerung von mindestens zwei Servomotoren kann der Frequenzumrichter eine der Anzahl der Servomotoren entsprechende Anzahl von Wechselrichterschaltungen aufweisen, die an den gemeinsamen Gleichspannungszwischenkreis des Frequenzumrichters angeschlossen sind, wobei die Einschaltschwelle und/oder die Ausschaltschwelle während des generatorischen Bremsbetriebs eines oder mehrerer der mindestens zwei Servomotoren in Abhängigkeit der momentanen Drehzahl desjenigen Servomotors dynamisch verändert wird, der momentan die höchste Zwischenkreisspannung induziert.

Im Anwendungsfall eines beispielhaften Roboterarms kann der Roboterarm mehrere Gelenke und mehrere Glieder aufweisen, die durch die Bewegungen der Gelenke des Roboterarms gegeneinander verstellbar sind. Dabei kann jedem Gelenk ein eigener Servomotor zugeordnet sein. Jeder dieser mehreren Servomotoren ist ausgebildet, das jeweils ihm zugeordnete Gelenk des Roboterarms zu verstellen und zwar durch automatisches Ansteuern des Servomotors. Der Roboterarm kann dazu eine Steuervorrichtung aufweisen, die ausgebildet ist zum automatischen Ansteuern der Servomotoren des Roboterarms, um die Glieder des Roboterarms durch angetriebenes Bewegen der Gelenke automatisch gegeneinander zu verstellen.

Jedes Gelenk und damit jeder diesem jeweiligen Gelenk zugeordnete Servomotor bewegt ein kinematisches System, das jeweils durch das diesem Servomotor in der kinematischen Kette des Roboterarms vorgelagerte, distale kinematische Teilsystem gebildet wird. So müssen die in der kinematischen Kette eher proximal angeordneten Servomotoren (Servomotoren der Grundachsen des Roboterarms) im Allgemeinen eine höhere kinetische Energie abbremsen, als die eher distal angeordneten Servomotoren (Servomotoren der Handachsen des Roboterarms). Je nach Pose der Gelenke des Roboterarms kann jedoch zu jedem beliebigen Zeitpunkt ein anderer Servomotor mit der momentan höchsten Bremslast belastet sein. So kann beispielsweise eine Situation auftreten, wo ein sich gerade entgegen der Schwerkraft nach oben bewegendes Grundgelenk abgebremst werden soll und somit die Bremskraft weitgehend durch die Schwerkraft bereitgestellt wird und der zugeordnete Servomotor somit keiner besonderen elektrischen Bremslast ausgesetzt ist. Andererseits kann ein eher leichtes Handgelenk des Roboterarms sich gerade in Schwerkraftrichtung bewegen, so dass beim Abbremsen der einwirkenden Erdbeschleunigung zusätzlich durch den Servomotor entgegengewirkt werden muss und somit dieser dem leichteren Handgelenk zugeordnete Servomotor einer besonders hohen elektrischen Bremslast ausgesetzt ist.

Im Laufe der Durchführung eines erfindungsgemäßen Verfahrens d.h. während der Dauer eines Bremsvorgangs kann deshalb gegebenenfalls der in Bezug genommene Servomotor in dessen Abhängigkeit die Zwischenkreisspannung mit dessen abnehmender Drehzahl kontinuierlich reduziert wird, wechseln. Wenn also derjenige Servomotor, in dessen Abhängigkeit die Zwischenkreisspannung bisher reduziert wird, zum Stehen gekommen ist oder seine momentane Drehzahl zumindest soweit reduziert ist, dass ein anderer Servomotor eine höhere Drehzahl aufweist, also folglich eine dann größere Spannung im Zwischenkreisspannung induziert, kann zur Regelung der Zwischenkreisspannung sozusagen auf diesen anderen Servomotor umgeschaltet werden, so dass dieser andere Servomotor insoweit die neue Leitgröße für die Regelung der Zwischenkreisspannung bildet.

In allen erfindungsgemäßen Ausführungsvarianten kann die elektrische Energie im Gleichspannungszwischenkreis während der dynamischen Veränderung der Einschaltschwelle und/oder der Ausschaltschwelle während des generatorischen Bremsbetriebs des Servomotors in denjenigen Zuständen des Gleichspannungszwischenkreises, in denen der Brems-Chopper den Bremswiderstand getrennt hat, erhöht werden, indem der Zwischenkreiskondensator ausschließlich durch die von dem wenigstens einen Servomotor generierte Energie aus der Wechselrichterschaltung gespeist wird.

Der wenigstens eine Servomotor kann speziell eine permanentmagnet-erregte Synchronmaschine sein.

Die erfindungsgemäße Aufgabe wird außerdem gelöst durch einen Roboter, aufweisend einen Roboterarm mit mehreren Gelenken und mehreren Gliedern, die durch die Bewegungen der Gelenke des Roboterarms gegeneinander verstellbar sind, wobei wenigstens einem der Gelenke ein Servomotor zugeordnet ist, welcher ausgebildet ist, das wenigstens eine Gelenk zu verstellen und zwar durch automatisches Ansteuern des Servomotors, und aufweisend eine Steuervorrichtung, die ausgebildet ist zum automatischen Ansteuern wenigstens eines Servomotors des Roboterarms, um die Glieder des Roboterarms durch angetriebenes Bewegen der Gelenke automatisch gegeneinander zu verstellen, wobei die Steuervorrichtung ausbildet und einrichtet ist, ein Verfahren nach einem beschriebenen Ausführungsformen durchzuführen.

Die Steuervorrichtung kann als ein Teil einer Robotersteuerung ausgebildet sein. Alternativ kann die Steuervorrichtung jedoch auch als separate Steuereinheit ausgebildet sein, die mit der Robotersteuerung zusammenwirkt, beispielsweise mittels einer Kommunikationsverbindung. Die Steuervorrichtung ist insbesondere ausgebildet einen Frequenzumrichter anzusteuern, der eine an ein elektrisches Wechselspannungsnetz anschließbare Gleichrichterschaltung, einen im an das elektrische Wechselspannungsnetz angeschlossenen Zustand aus dem elektrischen Wechselspannungsnetz gespeisten Gleichspannungszwischenkreis mit einem Zwischenkreiskondensator und mit einem über einen Brems-Chopper des Gleichspannungszwischenkreises zuschalt- und trennbaren Bremswiderstand, und wenigstens eine aus dem Gleichspannungszwischenkreis gespeiste Wechselrichterschaltung mit ansteuerbaren Leistungshalbleiterschaltern umfasst.

Die erfindungsgemäße Aufgabe wird außerdem gelöst durch ein Computerprogrammprodukt aufweisend einen maschinenlesbaren Träger, auf dem Programmcode gespeichert ist, der von einer Steuervorrichtung des erfindungsgemäßen Roboters auslesbar ist und der ausgelesen die Steuervorrichtung ausbildet und/oder einrichtet, ein Verfahren nach einem der beschriebenen Ausführungsformen durchzuführen, wenn der Programmcode von der Steuervorrichtung ausgeführt wird.

Das Computerprogrammprodukt kann beispielsweise eine CD, eine DVD oder ein USB-Stick sein. Das Computerprogrammprodukt kann aber auch eine Steuerungskarte sein, auf der Mikroprozessoren eingebunden sind. Das Computerprogrammprodukt kann jedoch auch in Form eines Downloads realisiert sein, der über das Internet oder ein anderes Netzwerk angeboten und verkauft werden kann.

Der maschinenlesbare Träger kann somit eine CD, eine DVD oder ein Mikroprozessor sein, auf dem der Programmcode gespeichert ist. Der maschinenlesbare Träger kann aber auch eine Festplatte oder ein SSD-Laufwerk sein, auf das der Programmcode heruntergeladen wurde, beispielsweise mittels eines Downloads, insbesondere in Form von Datenpaketen.

Der Programmcode kann durch ein editiertes Programm und/oder Daten repräsentiert sein, die auf dem maschinenlesbaren Träger gespeichert sind.

Durch ein Auslesen des editiertes Programm und/oder der Daten wird die auslesende Steuervorrichtung ausbildet und/oder einrichtet, das erfindungsgemäße Verfahren ausführen zu können.

Das erfindungsgemäße Verfahren wird durchgeführt, wenn die Steuervorrichtung den Programmcode d.h. das editierte Programm tatsächlich entsprechend ausführt und/oder die Daten tatsächlich entsprechend verarbeitet.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: ein Ablaufschema des erfindungsgemäßen Verfahrens,
- Fig. 2: eine Seitenansicht eines beispielhaften Industrieroboters, der einen Roboterarm mit Gliedern, Gelenken und Servomotoren umfasst, und der eine Robotersteuerung aufweist, die ausgebildet ist, ein erfindungsgemäßes Verfahren durchzuführen,
- Fig. 3: eine schematische Darstellung eines Schaltbildes eines beispielhaften Frequenzumrichters mit einem Servomotor, und
- Fig. 4: eine schematische Darstellung eines Schaltbildes eines beispielhaften abgewandelten Frequenzumrichters mit zwei oder mehre Servomotoren, die an einem gemeinsamen Gleichspannungszwischenkreis angeschlossen sind.

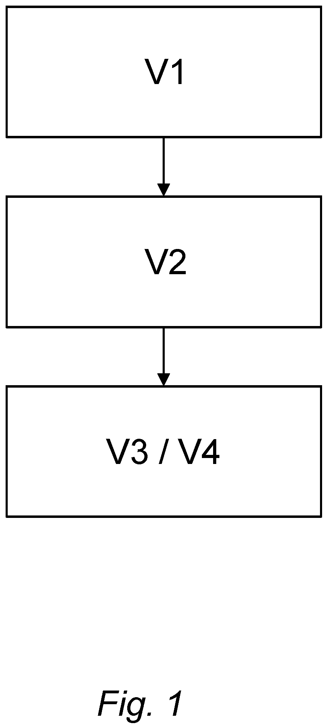

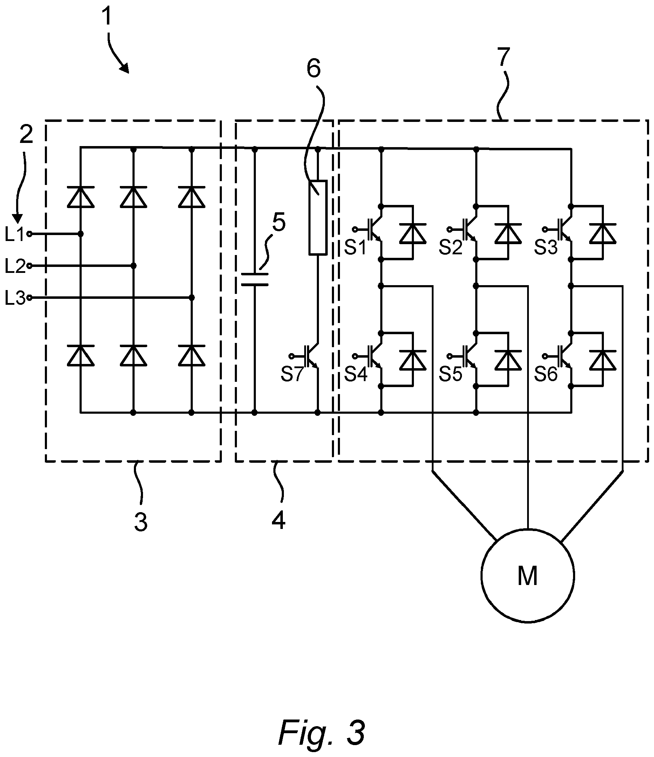

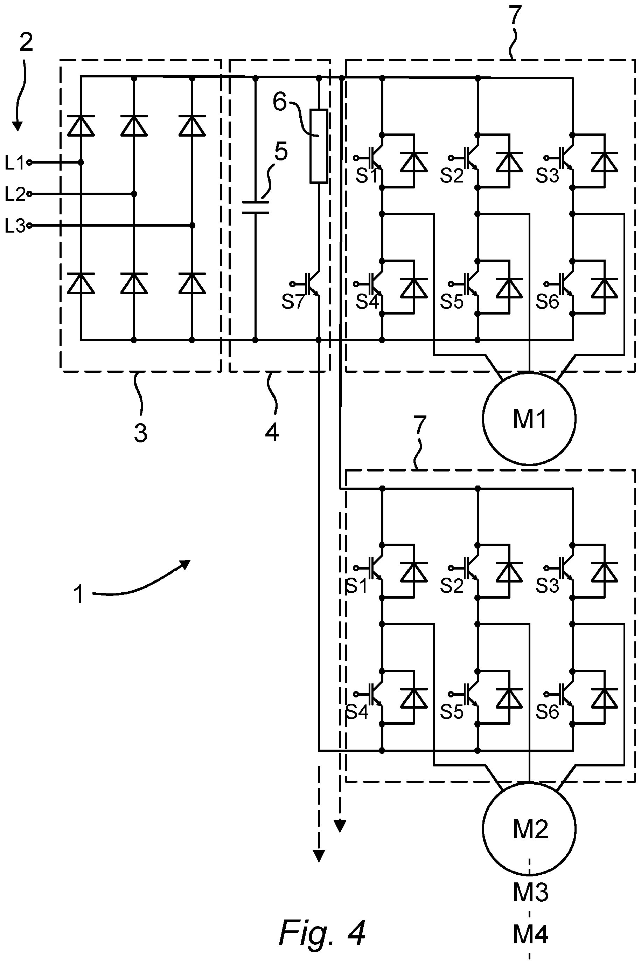

In Fig. 1 ist schematisch der Ablauf des grundlegenden erfindungsgemäßen Verfahrens zum abbremsenden Steuern wenigstens eines Servomotors M mittels eines Frequenzumrichters 1 (Fig. 3, Fig. 4) dargestellt.

Der Frequenzumrichter 1 kann, wie in Fig. 3 und Fig. 4 aufgezeigt ist, eine an ein elektrisches Wechselspannungsnetz 2 anschließbare Gleichrichterschaltung 3, einen im an das elektrische Wechselspannungsnetz 2 angeschlossenen Zustand aus dem elektrischen Wechselspannungsnetz 2 gespeisten Gleichspannungszwischenkreis 4 mit einem Zwischenkreiskondensator 5 und mit einem über einen Brems-Chopper S7 des Gleichspannungszwischenkreises 4 zuschalt- und trennbaren Bremswiderstand 6, und wenigstens eine aus dem Gleichspannungszwischenkreis 4 gespeiste Wechselrichterschaltung 7 mit ansteuerbaren Leistungshalbleiterschaltern S1 bis S6 aufweisen.

Das erfindungsgemäße Verfahren, wie in Fig.1 dargestellt, weist die folgenden Schritte auf:
Im ersten Schritt V1 erfolgt ein Trennen des Gleichspannungszwischenkreises 4 vom elektrischen Wechselspannungsnetz 2.

In einem folgenden zweiten Schritt V2 erfolgt ein Bremsen des Servomotors M durch Ansteuern der Leistungshalbleiterschalter S1-S6 der Wechselrichterschaltung 7 in einem generatorischen Bremsbetrieb, um die Drehzahl des Servomotors M zu reduzieren,

In einem dritten Schritt V3 erfolgt ein Ansteuern des Brems-Choppers S7 derart, dass der Bremswiderstand 6 bei einer maximalen Zwischenkreisspannung, die eine Einschaltschwelle für den Brems-Chopper S7 bildet, zugeschaltet wird und bei einer minimalen Zwischenkreisspannung, die eine Ausschaltschwelle für den Brems-Chopper S7 bildet, getrennt wird, wobei gemäß Schritt V4 die Einschaltschwelle und/oder die Ausschaltschwelle während des generatorischen Bremsbetriebs des Servomotors M in Abhängigkeit der momentanen Drehzahl des Servomotors M dynamisch verändert wird.

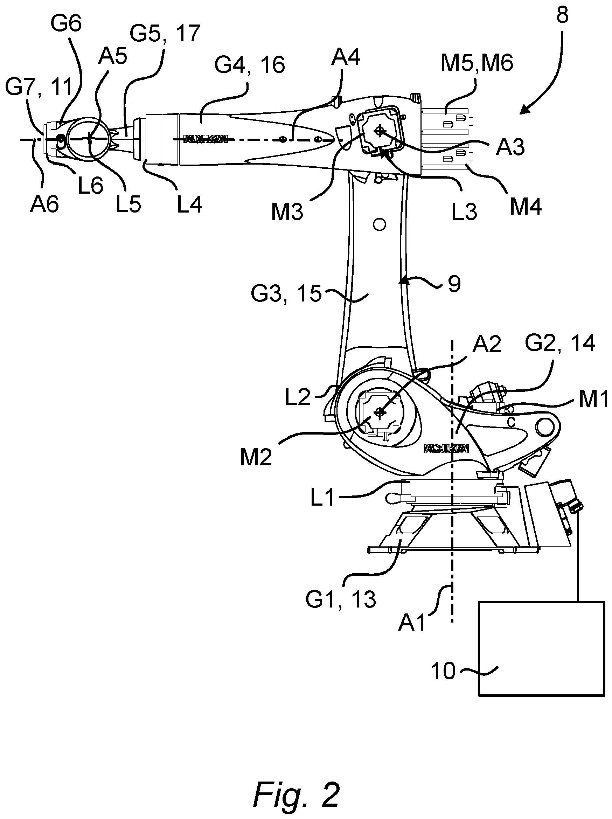

Die Fig. 2 zeigt einen Industrieroboter 8, der einen Roboterarm 9 und eine Robotersteuerung 10 aufweist. Der Roboterarm 9 umfasst im Falle des vorliegenden Ausführungsbeispiels mehrere, nacheinander angeordnete, und mittels Gelenke L1 bis L6 drehbar miteinander verbundene Glieder G1 bis G7.

Der Industrieroboter 8 weist die Robotersteuerung 10 auf, die ausgebildet ist, ein Roboterprogramm auszuführen und die Glieder G1-G7 und Gelenke L1-L6 des Roboterarms 9 automatisch zu bewegen. Eines der mehreren Glieder G1-G7 bildet ein Endglied (G7) des Roboterarms 9, das einen Werkzeugflansch 11 aufweist.

Die Robotersteuerung 10 des Industrieroboters 8 ist ausgebildet bzw. eingerichtet, ein Roboterprogramm auszuführen, durch welches die Gelenke L1 bis L6 des Roboterarms 9 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Antrieben, den Servomotoren M1 bis M6 verbunden, die ausgebildet sind, die jeweiligen Gelenke L1 bis L6 des Roboterarms 9 zu verstellen.

Bei den Gliedern G1 bis G7 handelt es sich im Falle des vorliegenden Ausführungsbeispiels um ein Robotergrundgestell 13 und ein relativ zum Robotergrundgestell 13 um eine vertikal verlaufende Achse A1 drehbar gelagertes Karussell 14. Weitere Glieder des Roboterarms 9 sind eine Schwinge 15, ein Armausleger 16 und eine vorzugsweise mehrachsige Roboterhand 17 mit einer als Werkzeugflansch 11 ausgeführten Befestigungsvorrichtung zum Befestigen eines Werkzeugs. Die Schwinge 15 ist am unteren Ende, d.h. an dem Gelenk L2 der Schwinge 15, das auch als Schwingenlagerkopf bezeichnet werden kann, auf dem Karussell 14 um eine vorzugsweise horizontale Drehachse A2 schwenkbar gelagert.

Am oberen Ende der Schwinge 15 ist an dem ersten Gelenk L3 der Schwinge 15 wiederum um eine ebenfalls vorzugsweise horizontale Achse A3 der Armausleger 16 schwenkbar gelagert. Dieser trägt endseitig die Roboterhand 17 mit ihren vorzugsweise drei Drehachsen A4, A5, A6. Die Gelenke L1 bis L6 sind durch jeweils einen der elektrischen Servomotoren M1 bis M6 über die Robotersteuerung 10 programmgesteuert antreibbar. Den Servomotoren M1 bis M6 ist dazu ein erfindungsgemäßer Frequenzumrichter 1, wie in Fig. 3 und Fig. 4 aufgezeigt ist, zugeordnet.

Der Frequenzumrichter 1, wie in Fig. 3 und Fig. 4 aufgezeigt ist, kann an ein elektrisches Wechselspannungsnetz 2 anschließbar sein. Das elektrische Wechselspannungsnetz 2 kann ein Dreiphasenwechselspannungsnetz, beispielsweise von 50 Hertz, sein. Es kann insbesondere als ein TN-System konfiguriert sei.

Ist der Frequenzumrichter 1 an das Wechselspannungsnetz 2 angeschlossen, so kann dessen Gleichrichterschaltung 3 die aus dem elektrischen Wechselspannungsnetz 2 gespeiste Wechselspannung in eine entsprechende Gleichspannung umwandeln. Die Gleichspannung wird dann einem Gleichspannungszwischenkreis 4 zugeführt. Der Gleichspannungszwischenkreis 4 ist mit einem Zwischenkreiskondensator 5 und mit einem über einen Brems-Chopper S7 des Gleichspannungszwischenkreises 4 zuschalt- und trennbaren Bremswiderstand 6 versehen.

An den Gleichspannungszwischenkreis 4 schließt sich wenigstens eine aus dem Gleichspannungszwischenkreis 4 gespeiste Wechselrichterschaltung 7 mit ansteuerbaren Leistungshalbleiterschaltern S1 bis S6 an.

Im Falle des Ausführungsbeispiels der Fig. 3 ist lediglich eine einzige Wechselrichterschaltung 7 an den Gleichspannungszwischenkreis 4 angeschlossen. Diese einzige Wechselrichterschaltung 7 versorgt den einzigen Servomotor M gemäß Fig. 3.

Im Falle des Ausführungsbeispiels der Fig. 4 sind mehrere Wechselrichterschaltungen 7 an den Gleichspannungszwischenkreis 4 angeschlossen. Diese mehreren Wechselrichterschaltungen 7 versorgen jeweils einen von mehreren Servomotoren M1 bis M6 gemäß Fig. 4. In Fig. 4 sind zur Veranschaulichung lediglich zwei Wechselrichterschaltungen 7 und zwei Servomotoren M1 und M2 vollständig dargestellt. Die gestrichelten Pfeile und die Bezeichnungen M3 und M4 deuten eine Anzahl von weiteren Servomotoren M3, M4, usw., und weiteren Wechselrichterschaltungen 7 an, die alle an den gemeinsamen Gleichspannungszwischenkreis 4 angeschlossen sind.

Im Falle des in Fig. 2 gezeigten beispielhaften Industrieroboters 8 können beispielsweise insgesamt sechs Wechselrichterschaltungen 7 für die sechs Servomotoren M1 bis M6 der sechs Gelenke L1 bis L6 des Roboterarms 9 vorgesehen sein.

## Patentansprüche

1. Verfahren zum abbremsenden Steuern wenigstens eines Servomotors (M, M1-M6) mittels eines Frequenzumrichters (1), der eine an ein elektrisches Wechselspannungsnetz (2) anschließbare Gleichrichterschaltung (3), einen im an das elektrische Wechselspannungsnetz (2) angeschlossenen Zustand aus dem elektrischen Wechselspannungsnetz (2) gespeisten Gleichspannungszwischenkreis (4) mit einem Zwischenkreiskondensator (5) und mit einem über einen Brems-Chopper (S7) des Gleichspannungszwischenkreises (4) zuschalt- und trennbaren Bremswiderstand (6), und wenigstens eine aus dem Gleichspannungszwischenkreis (4) gespeiste Wechselrichterschaltung (7) mit ansteuerbaren Leistungshalbleiterschaltern (S1-S6) umfasst, aufweisend die Schritte:
- Trennen des Gleichspannungszwischenkreises (4) vom elektrischen Wechselspannungsnetz (2),
- Bremsen des Servomotors (M, M1-M6) durch Ansteuern der Leistungshalbleiterschalter (S1-S6) der Wechselrichterschaltung (7) in einem generatorischen Bremsbetrieb, um die Drehzahl des Servomotors (M, M1-M6) zu reduzieren,
**gekennzeichnet durch**
- Ansteuern des Brems-Choppers (S7) derart, dass der Bremswiderstand (6) bei einer maximalen Zwischenkreisspannung, die eine Einschaltschwelle für den Brems-Chopper (S7) bildet, zugeschaltet wird und bei einer minimalen Zwischenkreisspannung, die eine Ausschaltschwelle für den Brems-Chopper (S7) bildet, getrennt wird, wobei
- die Einschaltschwelle und/oder die Ausschaltschwelle während des generatorischen Bremsbetriebs des Servomotors (M, M1-M6) in Abhängigkeit der momentanen Drehzahl des Servomotors (M, M1-M6) dynamisch verändert wird.

2. Verfahren nach Anspruch 1, **dadurch gekennzeichnet, dass** die Einschaltschwelle und/oder die Ausschaltschwelle während des generatorischen Bremsbetriebs des Servomotors (M, M1-M6) in Abhängigkeit der momentanen Drehzahl des Servomotors (M, M1-M6) dynamisch derart verändert werden, dass die Zwischenkreisspannung mit abnehmender Drehzahl des Servomotors (M, M1-M6) kontinuierlich reduziert wird.

3. Verfahren nach Anspruch 2, **dadurch gekennzeichnet, dass** die Reduktion der Zwischenkreisspannung proportional zur Abnahme der Drehzahl des Servomotors (M, M1-M6) durchgeführt wird.

4. Verfahren nach einem der Ansprüche 1 bis 3, **dadurch gekennzeichnet, dass** die Einschaltschwelle und/oder die Ausschaltschwelle während des generatorischen Bremsbetriebs des Servomotors (M, M1-M6) in Abhängigkeit der momentanen Drehzahl des Servomotors (M, M1-M6) verändert wird, indem die Veränderung der Einschaltschwelle und/oder der Ausschaltschwelle auf Grundlage einer mittels eines Motorpositionssensors gemessenen momentanen Drehzahl des Servomotors (M, M1-M6) oder auf Grundlage der gemessenen momentan im Servomotor (M, M1-M6) vorherrschenden Motorspannung des Servomotors (M, M1-M6) durchgeführt wird.

5. Verfahren nach einem der Ansprüche 1 bis 4, **dadurch gekennzeichnet, dass** die Einschaltschwelle und/oder die Ausschaltschwelle während des generatorischen Bremsbetriebs des Servomotors (M, M1-M6) in Abhängigkeit der momentanen Drehzahl des Servomotors (M, M1-M6) bis zu einem vorgegebenen Minimalschwellwert abgesenkt wird, insbesondere der Ausschaltschwellwert auf einen Minimalschwellwert abgesenkt wird, der unter der Netzspannung des Wechselspannungsnetzes (2) liegt.

6. Verfahren nach einem der Ansprüche 1 bis 5, **dadurch gekennzeichnet, dass** die Einschaltschwelle und/oder die Ausschaltschwelle während des generatorischen Bremsbetriebs des Servomotors (M, M1-M6) in Abhängigkeit der momentanen Drehzahl des Servomotors (M, M1-M6) lediglich bis zu einem Minimalschwellwert abgesenkt wird, bei dem im Gleichspannungszwischenkreis (4) eine Mindestspannung anliegt, bei welcher der generatorische Bremsbetrieb des Servomotors (M, M1-M6) durch Ansteuern der Leistungshalbleiterschalter (S1-S6) der Wechselrichterschaltung (7) weiterhin sichergestellt ist.

7. Verfahren nach einem der Ansprüche 1 bis 6, **dadurch gekennzeichnet, dass** zur gleichzeitigen Ansteuerung von mindestens zwei Servomotoren (M, M1-M6) der Frequenzumrichter (1) eine der Anzahl der Servomotoren (M, M1-M6) entsprechende Anzahl von Wechselrichterschaltungen (7) aufweist, die an den gemeinsamen Gleichspannungszwischenkreis (4) des Frequenzumrichters (1) angeschlossen sind, wobei die Einschaltschwelle und/oder die Ausschaltschwelle während des generatorischen Bremsbetriebs eines oder mehrerer der mindestens zwei Servomotoren (M, M1-M6) in Abhängigkeit der momentanen Drehzahl desjenigen Servomotors (M, M1-M6) dynamisch verändert wird, der momentan die höchste Zwischenkreisspannung induziert.

8. Verfahren nach einem der Ansprüche 1 bis 7, **dadurch gekennzeichnet, dass** die elektrische Energie im Gleichspannungszwischenkreis (4) während der dynamischen Veränderung der Einschaltschwelle und/oder der Ausschaltschwelle während des generatorischen Bremsbetriebs des Servomotors (M, M1-M6) in denjenigen Zuständen des Gleichspannungszwischenkreises (4), in denen der Brems-Chopper (S7) den Bremswiderstand (6) getrennt hat, erhöht wird, indem der Zwischenkreiskondensator (5) ausschließlich durch die von dem wenigstens einen Servomotor (M, M1-M6) generierte Energie aus der Wechselrichterschaltung (7) gespeist wird.

9. Roboter, aufweisend einen Roboterarm (9) mit mehreren Gelenken (L1-L6) und mehreren Gliedern (G1-G7), die durch die Bewegungen der Gelenke (L1-L6) des Roboterarms (9) gegeneinander verstellbar sind, wobei wenigstens einem der Gelenke (L1-L6) ein Servomotor (M, M1-M6) zugeordnet ist, welcher ausgebildet ist, das wenigstens eine Gelenk (L1-L6) zu verstellen und zwar durch automatisches Ansteuern des Servomotors (M, M1-M6), und aufweisend eine Steuervorrichtung (10), die ausgebildet ist zum automatischen Ansteuern wenigstens eines Servomotors (M, M1-M6) des Roboterarms (9), um die Glieder (G1-G7) des Roboterarms (9) durch angetriebenes Bewegen der Gelenke (L1-L6) automatisch gegeneinander zu verstellen, **dadurch gekennzeichnet, daß** die Steuervorrichtung (10) ausgebildet und eingerichtet ist, ein Verfahren nach einem der Ansprüche 1 bis 8 durchzuführen.

10. Computerprogrammprodukt aufweisend einen maschinenlesbaren Träger, auf dem Programmcode gespeichert ist, der von einer Steuervorrichtung (10) des Roboters (9) gemäß Anspruch 9 auslesbar ist und der ausgelesen die Steuervorrichtung (10) ausbildet und/oder einrichtet, ein Verfahren nach einem der Ansprüche 1 bis 8 durchzuführen, wenn der Programmcode von der Steuervorrichtung (10) ausgeführt wird.

## Claims

1. Method for the braking-based control of at least one servomotor (M, M1-M6) by way of a frequency converter (1) comprising a rectifier circuit (3) able to be connected to an electrical AC voltage grid (2), a DC link (4) that is fed from the electrical AC voltage grid (2) in the state connected to the electrical AC voltage grid (2), has a link capacitor (5) and has a braking resistor (6) that is able to be connected and disconnected via a braking chopper (S7) of the DC link (4), and at least one inverter circuit (7) that is fed from the DC link (4) and has driveable power semiconductor switches (S1-S6), comprising the following steps:
- disconnecting the DC link (4) from the electrical AC voltage grid (2),
- braking the servomotor (M, M1-M6) by driving the power semiconductor switches (S1-S6) of the inverter circuit (7) in a generative braking mode in order to reduce the speed of the servomotor (M, M1-M6),
**characterized by**
- driving the braking chopper (S7) such that the braking resistor (6) is connected at a maximum link voltage that forms a switch-on threshold for the braking chopper (S7) and is disconnected at a minimum link voltage that forms a switch-off threshold for the braking chopper (S7), wherein
- the switch-on threshold and/or the switch-off threshold is changed dynamically during generative braking mode of the servomotor (M, M1-M6) depending on the current speed of the servomotor (M, M1-M6).

2. Method according to Claim 1, **characterized in that** the switch-on threshold and/or the switch-off threshold are changed dynamically during generative braking mode of the servomotor (M, M1-M6) depending on the current speed of the servomotor (M, M1-M6), such that the link voltage is reduced continuously as the speed of the servomotor (M, M1-M6) decreases.

3. Method according to Claim 2, **characterized in that** the link voltage is reduced in proportion to the decrease in the speed of the servomotor (M, M1-M6).

4. Method according to one of Claims 1 to 3, **characterized in that** the switch-on threshold and/or the switch-off threshold is changed during generative braking mode of the servomotor (M, M1-M6) depending on the current speed of the servomotor (M, M1-M6) by virtue of the switch-on threshold and/or the switch-off threshold being changed on the basis of a current speed of the servomotor (M, M1-M6) as measured by way of a motor position sensor or on the basis of the measured motor voltage of the servomotor (M, M1-M6) currently prevailing in the servomotor (M, M1-M6).

5. Method according to one of Claims 1 to 4, **characterized in that** the switch-on threshold and/or the switch-off threshold is lowered during generative braking mode of the servomotor (M, M1-M6), depending on the current speed of the servomotor (M, M1-M6), down to a predefined minimum threshold value, in particular the switch-off threshold value is lowered to a minimum threshold value below the grid voltage of the AC voltage grid (2).

6. Method according to one of Claims 1 to 5, **characterized in that** the switch-on threshold and/or the switch-off threshold is lowered during generative braking mode of the servomotor (M, M1-M6), depending on the current speed of the servomotor (M, M1-M6), only down to a minimum threshold value at which a minimum voltage is present in the DC link (4) at which generative braking mode of the servomotor (M, M1-M6) is still provided by driving the power semiconductor switches (S1-S6) of the inverter circuit (7).

7. Method according to one of Claims 1 to 6, **characterized in that**, in order to simultaneously drive at least two servomotors (M, M1-M6), the frequency converter (1) has a number of inverter circuits (7) corresponding to the number of servomotors (M, M1-M6) and connected to the common DC link (4) of the frequency converter (1), wherein the switch-on threshold and/or the switch-off threshold is changed dynamically during generative braking mode of one or more of the at least two servomotors (M, M1-M6) depending on the current speed of the servomotor (M, M1-M6) that is currently inducing the highest link voltage.

8. Method according to one of Claims 1 to 7, **characterized in that** the electrical energy in the DC link (4) is increased during the dynamic change in the switch-on threshold and/or the switch-off threshold during generative braking mode of the servomotor (M, M1-M6) in the states of the DC link (4) in which the braking chopper (S7) has disconnected the braking resistor (6) by virtue of the link capacitor (5) being fed exclusively by the energy from the inverter circuit (7) that is generated by the at least one servomotor (M, M1-M6).

9. Robot, having a robot arm (9) having multiple articulations (L1-L6) and multiple limbs (G1-G7) able to be adjusted relative to one another by the movements of the articulations (L1-L6) of the robot arm (9), wherein at least one of the articulations (L1-L6) is assigned a servomotor (M, M1-M6) that is designed to adjust the at least one articulation (L1-L6) by automatically driving the servomotor (M, M1-M6), and having a control device (10) that is designed to automatically drive at least one servomotor (M, M1-M6) of the robot arm (9) in order to automatically adjust the limbs (G1-G7) of the robot arm (9) relative to one another through driven movement of the articulations (L1-L6),
**characterized in that** the control device (10) is designed and configured to perform a method according to one of Claims 1 to 8.

10. Computer program product having a machine-readable medium on which there is stored program code that is able to be read by a control device (10) of the robot (9) according to Claim 9 and, when read, designs and/or configures the control device (10) to perform a method according to one of Claims 1 to 8 when the program code is executed by the control device (10).

## Revendications

1. Procédé de commande du freinage d'au moins un servomoteur (M, M1-M6) au moyen d'un convertisseur de fréquence (1) qui comporte un circuit redresseur (3) qui peut être raccordé à un réseau électrique à tension alternative (2), un circuit intermédiaire à tension continue (4) qui est alimenté à partir du réseau électrique à tension alternative (2) lorsqu'il est raccordé au réseau électrique à tension alternative (2) et qui comprend un condensateur de circuit intermédiaire (5) et une résistance de freinage (6) qui peut être connectée et déconnectée par le biais d'un hacheur de freinage (S7) du circuit intermédiaire à tension continue (4), et au moins un circuit onduleur (7) qui est alimenté par le circuit intermédiaire à tension continue (4) et qui comprend des commutateurs à semi-conducteurs de puissance commandables (S1-S6), ledit procédé comportant les étapes suivantes :
- déconnecter le circuit intermédiaire à tension continue (4) du réseau électrique à tension alternative (2),
- freiner le servomoteur (M, M1-M6) par commande des commutateurs à semi-conducteurs de puissance (S1-S6) du circuit onduleur (7) dans un mode de freinage générateur afin de réduire la vitesse de rotation du servomoteur (M, M1-M6),
**caractérisé par** les étapes suivantes
- commander le hacheur de freinage (S7) de telle sorte que la résistance de freinage (6) soit connectée à une tension de circuit intermédiaire maximale qui forme un seuil de mise en circuit du hacheur de freinage (S7), et déconnectée à une tension de circuit intermédiaire minimale qui forme un seuil de mise hors circuit du hacheur de freinage (S7),
- le seuil de mise en circuit et/ou le seuil de mise hors circuit étant modifiés dynamiquement pendant le mode de freinage générateur du servomoteur (M, M1-M6) en fonction de la vitesse de rotation instantanée du servomoteur (M, M1-M6).

2. Procédé selon la revendication 1, **caractérisé en ce que** le seuil de mise en circuit et/ou le seuil de mise hors circuit sont modifiés dynamiquement pendant le mode de freinage générateur du servomoteur (M, M1-M6) en fonction de la vitesse de rotation instantanée du servomoteur (M, M1-M6) de manière à ce que la tension de circuit intermédiaire soit réduite en continu à mesure que la vitesse de rotation du servomoteur (M, M1-M6) diminue.

3. Procédé selon la revendication 2, **caractérisé en ce que** la réduction de la tension de circuit intermédiaire est effectuée proportionnellement à la diminution de la vitesse de rotation du servomoteur (M, M1-M6).

4. Procédé selon l'une des revendications 1 à 3, **caractérisé en ce que** le seuil de mise en circuit et/ou le seuil de mise hors circuit est modifié pendant le mode de freinage générateur du servomoteur (M, M1-M6) en fonction de la vitesse de rotation instantanée du servomoteur (M, M1-M6) du fait que la modification du seuil de mise en circuit et/ou du seuil de mise hors circuit sont effectuées en fonction d'une vitesse de rotation instantanée du servomoteur (M, M1-M6), mesurée au moyen d'un capteur de position de moteur ou sur la base de la tension mesurée du servomoteur (M, M1-M6) qui prévaut instantanément dans le servomoteur (M, M1-M6) .

5. Procédé selon l'une des revendications 1 à 4, **caractérisé en ce que** le seuil de mise en circuit et/ou le seuil de mise hors circuit sont abaissés pendant le mode de freinage générateur du servomoteur (M, M1-M6) en fonction de la vitesse de rotation instantanée du servomoteur (M, M1-M6) jusqu'à une valeur de seuil minimale spécifiée, en particulier la valeur de seuil de mise hors circuit qui est inférieure à la tension du réseau de tension alternative (2).

6. Procédé selon l'une des revendications 1 à 5, **caractérisé en ce que** le seuil de mise en circuit et/ou le seuil de mise hors circuit sont abaissés pendant le mode de freinage générateur du servomoteur (M, M1-M6) en fonction de la vitesse de rotation instantanée du servomoteur (M, M1-M6) seulement jusqu'à une valeur de seuil minimale pour laquelle une tension minimale est présente dans le circuit intermédiaire à tension continue (4) pour laquelle le mode de freinage générateur du servomoteur (M, M1-M6) est en outre assuré par la commande des commutateurs à semi-conducteurs de puissance (S1-S6) du circuit onduleur (7) .

7. Procédé selon l'une des revendications 1 à 6, **caractérisé en ce que**, pour commander simultanément au moins deux servomoteurs (M, M1-M6) du convertisseur de fréquence (1), un certain nombre de circuits onduleurs (7), qui correspond au nombre de servomoteurs (M, M1-M6), sont raccordés au circuit intermédiaire commun à tension continue (4) du convertisseur de fréquence (1), le seuil de mise en circuit et/ou le seuil de mise hors circuit étant modifiés dynamiquement pendant le mode de freinage générateur d'un ou plusieurs des au moins deux servomoteurs (M, M1-M6) en fonction de la vitesse de rotation instantanée du servomoteur (M, M1-M6) qui induit instantanément la tension de circuit intermédiaire la plus élevée.

8. Procédé selon l'une des revendications 1 à 7, **caractérisé en ce que** l'énergie électrique dans le circuit intermédiaire à tension continue (4) lors de la modification dynamique du seuil de mise en circuit et/ou du seuil de mise hors circuit pendant le mode de freinage générateur du servomoteur (M, M1-M6) est augmentée dans les états du circuit intermédiaire à courant continu (4) dans lesquels le hacheur de freinage (S7) a déconnecté la résistance de freinage (6) du fait que le condensateur de circuit intermédiaire (5) est alimenté exclusivement par l'énergie qui provient du circuit onduleur (7) et qui est générée par l'au moins un servomoteur (M, M1-M6).

9. Robot, comportant un bras de robot (9) à plusieurs articulations (L1-L6) et plusieurs éléments (G1-G7) qui sont réglables les uns par rapport aux autres par les mouvements des articulations (L1-L6) du bras de robot (9), au moins une des articulations (L1-L6) étant associée à un servomoteur (M, M1-M6) qui est conçu pour régler l'au moins une articulation (L1-L6) c'est-à-dire en commandant automatiquement le servomoteur (M, M1-M6 ), et comportant un dispositif de commande (10) qui est conçu pour commander automatiquement au moins un servomoteur (M, M1-M6) du bras de robot (9) afin de régler automatiquement les uns aux autres les éléments (G1-G7) du bras de robot (9) par entraînement des articulations (L1-L6),
**caractérisé en ce que** le dispositif de commande (10) est configuré et adapté pour mettre en œuvre un procédé selon l'une des revendications 1 à 8.

10. Produit programme d'ordinateur comportant un support lisible par machine sur lequel est stocké un code de programme qui peut être lu par un dispositif de commande (10) du robot (9) selon la revendication 9 et qui, une fois lu, configure et/ou adapte le dispositif de commande (10) pour mettre en œuvre un procédé selon l'une des revendications 1 à 8 lorsque le code de programme est exécuté par le dispositif de commande (10) .
